# EUROPEAN PATENT APPLICATION

(11) **EP 2 031 879 A1**
(43) Date of publication of application: **04.03.2009**
(21) Application number: 07115225.0
(22) Date of filing: 29.08.2007
(51) Int. Cl.: H04N 7/26, H04N 5/262, H04N 7/18

(54) **Multiviewer based on merging of output streams of spatio scalable codecs in a compressed domain**

(71) Applicant: Barco NV, 8500 Kortrijk (BE)
(72) Inventor: Nuyttens, Geert, 8501 Bissegem (BE)
(74) Representative: von Kreisler Selting Werner

(57) **Abstract**

A viewer system, components and method that are operable to efficiently merge data streams prior to decoding them, and then transmit the merged data stream for decoding and displaying. Unlike prior art multiple encoded image viewing solutions, the present system and method enables the use of significantly less bandwidth and less resources for decoding the data stream to provide a more efficient viewer system.

## Description

### Field of Invention

The present invention relates generally to displaying multiple images on a monitor, and more particularly to displaying multiple images that have been merged in a compressed domain before being decoded.

### Background of Invention

Multiple encoded images with merged output streams can provide solutions for many different monitoring and visualization solution tasks where multiple sources of information have to be combined for visualization on one or more displays. Multiviewers with merged outputs are typically used as monitoring solutions for the broadcast and security markets. This allows for the use of a reduced number of displays while still displaying all the desired information.

In a typical multiple encoded image viewing system, spatio temporal scalable codecs allow access to compressed images at a reduced quality, resolution, or selected spatial region. The multiple encoded images are then decoded and optionally scaled, after which the images are merged for display.

Although advantageous to reduce the number of displays, one of the problems with merging images is that the merged images may contain boundary artifacts that slightly distort the image. Various types of codecs can be used to determine if there will be boundary artifacts at the area where the images are composed. An example of a codec that can be used is JPEG2000, which shows only minimal artifacts when using precincts as its structural elements as compared to using tiles, which can have more evident artifacts when reproducing a lower quality image. It is advantageous to reduce the boundary artifacts so as to enhance the quality of the image to be displayed.

### Summary

The present invention provides a viewer system that is operable to efficiently merge data streams prior to decoding them, and then transmit the merged data stream for decoding and displaying. Unlike prior art multiple encoded image viewing solutions, the present system enables the use of significantly less bandwidth and less resources for decoding the data stream to provide a more efficient viewer system.

More particularly, a multi-image viewer system and method according to the invention is characterized by an encoder having inputs for receiving images from one or more sources and one or more processors for encoding the multiple images; a decoder defining with the encoder a compressed domain therebetween, and a combiner within the compressed domain operative to merge structural elements of the multiple images into an encoded multi-view image data stream for delivery to the decoder.

The system and method may have associated therewith a storage device for storing the encoded multi-view image data stream as may be desired for subsequent viewing and/or replay, and/or at least one monitor for displaying the multi-view image after decoding by the decoder.

A scaler may be used to scale one or more parts of the multi-view image prior to display on a monitor.

In a preferred embodiment, the encoder is configured to use structural elements of one or more of the encoded source streams which allows exchanging or merging of the encoded multi-view image streams. This may be implemented using a codec and particularly a JPEG2000 codec. Precincts, code blocks and/or tiles may be used as structural elements on which to base the merging of source streams.

The present invention also provides components and methods for implementing one or more features of the invention. At the upstream end, a system and method for producing a merged data stream use an encoder having inputs for receiving images from one or more sources and one or more processors for encoding the multiple images; and a combiner operative to merge structural elements of the multiple images into an encoded multi-view image data stream for delivery to a decoder that defines with the encoder a compressed domain therebetween. At the downstream end, a system and method use a decoder for decoding an encoded multi-view image data stream that includes merged structural elements of multiple encoded images.

The foregoing and other features of the invention are hereinafter described in greater detail with reference to the accompanying drawings.

### Brief Description of the Drawings

In the annexed drawings:
Fig. 1 is a diagrammatic illustration of a conventional multiple encoded image viewing system;
Fig. 2 is a diagrammatic illustration of an exemplary viewer system in accordance with the present invention;
Fig. 3 is an illustration of the JPEG2000 domain used to complete the merging operations;
Fig. 4 is an illustration of the merging of data from two data streams that occurs in the compressed domain;
Fig. 5 represents a typical view of merged data streams on a broadcast multiviewer display; and
Fig. 6 represents a typical view of merged data streams on a security multiviewer display.

### Detailed Description

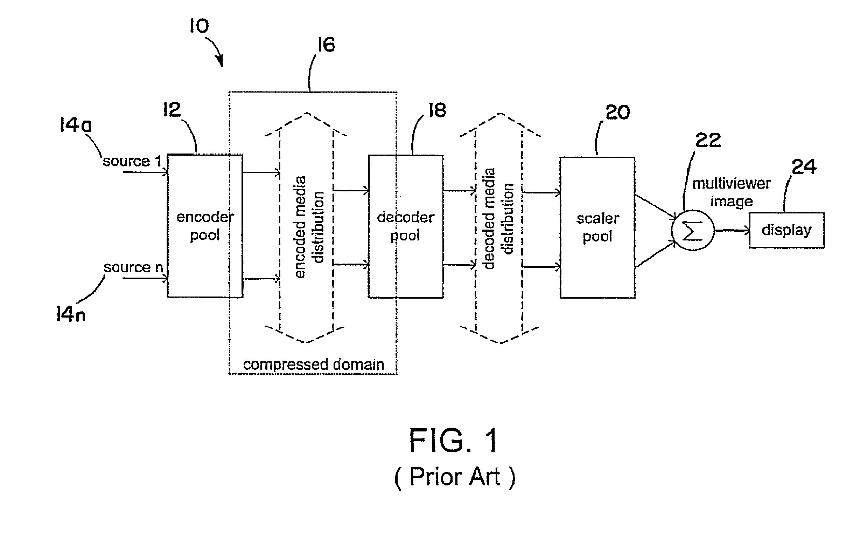

Referring now in detail to the drawings, a conventional prior art viewer system is illustrated in Fig. 1. The prior art viewer system, indicated generally at 10, comprises an encoder (encoder pool) 12 that receives multiple images (1, 2, 3 or more images) from multiple sources (1, 2, 3 or more sources) 14a-14n. Each image is then encoded (compressed) by the encoder pool for distribution in the compressed domain 16 to a decoder (decoder pool), Each encoded image is decoded by the decoder pool 18 and passed to a scaler (scaler pool) 20, after which the images are combined by a composer 22 to produce a multiviewer image for viewing on a display 24.

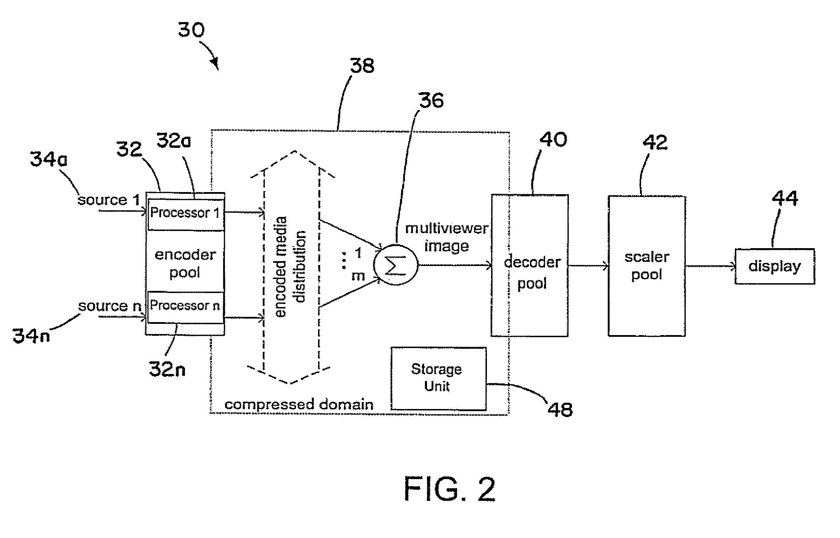

In Fig. 2, an exemplary viewer system according to the invention is indicated generally by reference numeral 30. The viewer system 30 comprises an encoder (encoder pool) 32 that receives at respective inputs multiple images (image streams) from one or more sources 34a-34n. The multiple images are encoded (compressed) by the encoder 32 and combined by a combiner 36 in the compressed domain 38 prior to distribution to a decoder (decoder pool) 40. The encoder 32 (or processor pool) includes at least one and usually multiple processors 32a-32n for processing the images, such as video streams, received from the sources 34a-34n . The number of processors in the encoder may vary. Each of the processors may generate a respective encoded (compressed) image (e.g. video streams).

The combiner 36 merges the images in the compressed domain, for example by merging structural elements of the encoded streams into a single encoded multi-viewer stream. The combiner may comprise, for example, one or more microprocessors or PCs that may be assisted by hardware acceleration components (as typically multiple Gb/s network connections may be needed to retrieve the streams prior to combination.

The single encoded multi-viewer stream is later decoded by the decoder 40, and one or more parts of the decoded composite image may be scaled by a scaler or scaler pool 42 prior to being displayed on a display (monitor) 44. The decoder and scaler each may include one or more processors for decoding the encoded multi-viewer stream and scaling one or more parts of the encoded multi-viewer stream. More particularly, the single merged output stream may have a very high resolution and multiple decoder processors may be used to decode the output stream. Depending on the display resolution, one or more scaler processors may be used. In a typical implementation, the scaler processor can be an intrinsic part of the graphical processor that renders the video image. For instance, the graphics card of a PC may be used to do the scaling. A pool of scaler processors may comprise multiple graphics cards for driving multiple monitors.

Consequently, a single encoded multi-viewer image is being used as a carrier for encoded content of multiple sources. This has a number of advantages such as bandwidth minimization when merging takes place as close as possible to the encoding of the original sources. Even better, the resource needs for decoding the information to be displayed is minimized.

When merging the compressed encoded streams from the multiple sources 34a-34n, the structural elements of the streams should fit the characteristics of the structural elements of the multi-viewer image. This will assist in the merging of the structural elements of the streams. When merging is based on the structural elements of the compressed encoded stream, the spatial characteristics of the structural elements being merged may be based on certain positions and have certain sizes. The scaler 42 may be optionally used to scale some or all parts of the multi-viewer image, which would eliminate any potential position or size limitation.

The encoded multi-viewer image may be stored in a storage unit 48 prior to decoding, or the decoded image may be stored prior to being scaled. The multi-viewer image can be transferred to the display 44 either after all or part of the image has been scaled or without any part of the image being scaled. The display 44 can be part of a viewing apparatus used for viewing multiple images that have been merged. One or more displays may be used to display the merged stream(s). This method, used to merge the data stream, may add some delay to the solution.

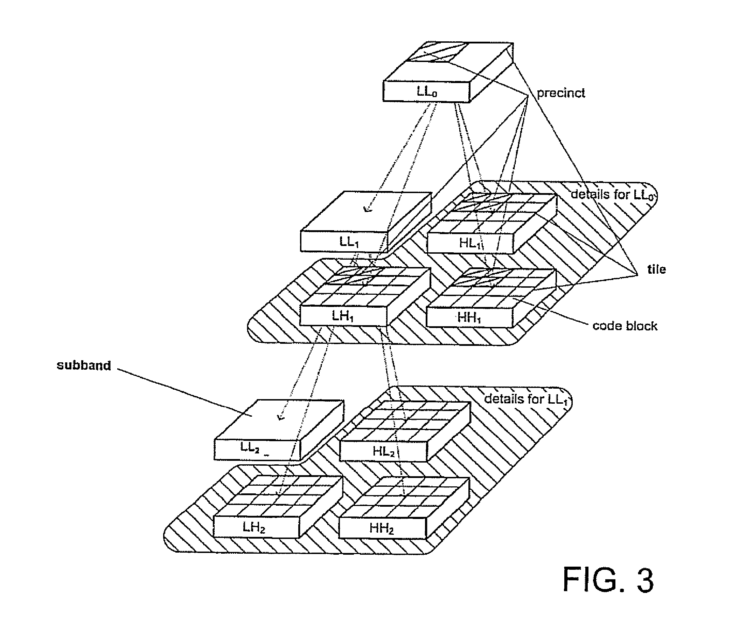

By way of example, the source streams can be merged in the JPEG2000 domain where the source streams 34a-34n can be merged by using either code-blocks, precincts or tiles as structural elements on which to base merging operations as illustrated in Fig. 3. The JPEG2000 codec is a wavelet-based image compression standard. It should be appreciated that codecs other than JPEG2000 may be used to accomplish the merging task in accordance with the invention. Different codecs generate different extents of boundary artifacts where the images are composed. When the structural elements used to base merging on are precincts, the JPEG2000 codec shows only minimal artifacts. Other types of structural elements may be used however, such as code blocks or tiles.

Each image is made up of a number of tiles. Each tile is made up of a number of precincts, which are made up of a number of code blocks. The precincts, code blocks, and tiles are used to exchange elements of one or more JPEG2000 data streams with another. It should be noted that when reproducing a lower quality image, artifacts can become more evident when using tiles rather than code blocks or precincts. It is advantageous to reduce the boundary artifacts so as to enhance the quality of the image to be displayed, and therefore tiles are less preferred for merging lower quality images. When using code blocks, because of the overlapping of properties from the wavelet synthesis, the code blocks of different regions in an image have a slight influence over neighboring spatial regions. This may cause minor visual artifacts when merging multiple sources, but still may be used for some applications.

The JPEG2000 codec of Fig. 3 shows the image subbands LL₀, LL₁, HL₁, HH₂, etc. The subbands are partitioned into rectangular code blocks, which are encoded independently and associated with a limited spatial region. Although code blocks are coded independently, they presently are not identified in a JPEG2000 data stream. Instead, the code blocks can be collected into larger groupings of precincts.

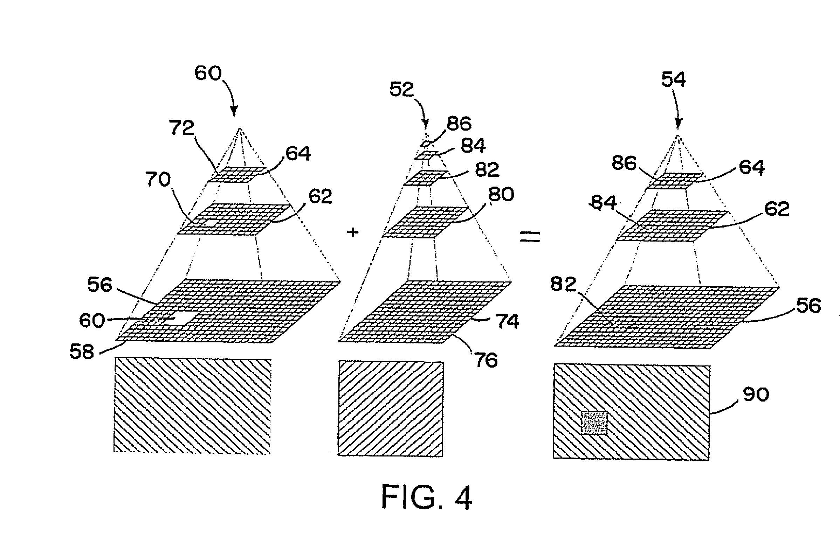

The subbands labeled LL₀, LL₁, and LL₂ represent the compressed image at different image resolutions, the merging of these multi-resolution image structures is illustrated in Fig. 4. For every different image resolution, precinct dimensions can be defined. Each precinct at a different image resolution, for example the resolution LL₀, consists of the code blocks belonging to the same spatial region within the subbands LH₁, HL₁ and HH₁. Some or all of these precincts can then be used as the structural elements to replace the precincts in another image, or be replaced themselves. By completing the merging using the JPEG2000 codec, superior compression performance over other codecs can be achieved, especially at lower bit rates.

Fig. 4 illustrates the use of precincts to merge two images into one data stream. A portion of the first image pyramid structure 50 is merged with a portion of the second image pyramid structure 52 to create the merged image pyramid structure 54. The first original image 56 is made up of numerous precincts 58, which are used as the structural elements for merging, and includes an area 60 to be replaced. An initial size/number of precincts 58 are chosen and the dimensions are shrunk by a factor of two (or power of two) to produce each successive lower resolution 62 and 64. The spatial influence of the precinct 58 preferably is kept the same in every resolution and the images are automatically scaled down prior to merging. In each successive lower resolution the areas 70 and 72 to be replaced also shrink by a factor of two (or power of two).

The second image pyramid structure 52 represents five different resolutions of the second original image 74, which is also made up of numerous precincts 76. An initial size/number of precincts 76 are chosen and the dimensions are shrunk by a factor of two (or power of two) to produce each successive lower resolution 80, 82, 84 and 86. In this example, the entire second original image 74 will become a portion of the first original image 56. The three smallest lower resolution images 82, 84 and 86 represent the lower resolutions of the second original image 74 that will replace the areas 60, 70 and 72 in the first image pyramid structure 50.

The merged image pyramid structure 54 shows the different resolutions of the merged image 90. The lower resolution area 82 replaced the area 60 of image 56. The lower resolution area 84 replaced the area 70 on the lower resolution image 62. Finally, the lower resolution area 86 replaced the area 72 on the lower resolution image 64. In this way multiple images can be merged while having only minimal visual boundary artifacts.

It is be noted that the areas to be replaced can be anywhere on the first image and the entire second image need not replace an area of the first image, but a portion of the second image may replace a portion of the first image. Two sources do not have to be used for this process. One or more sources may be combined as mentioned above to produce a merged image or multiple merged images. Furthermore, precincts are not the only structural elements capable of being used to created the merged data streams. Code blocks or tiles can be used with the effect of varying the visual boundary artifacts.

The number of source streams may be varied depending on, for example, the particular implementation, and the source streams may include, but are not limited to, static images, videos (dynamic images), digital data, etc., and combinations thereof.

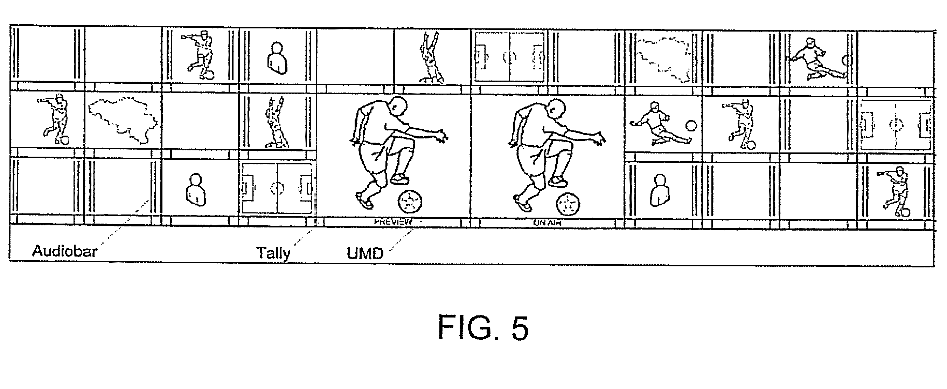

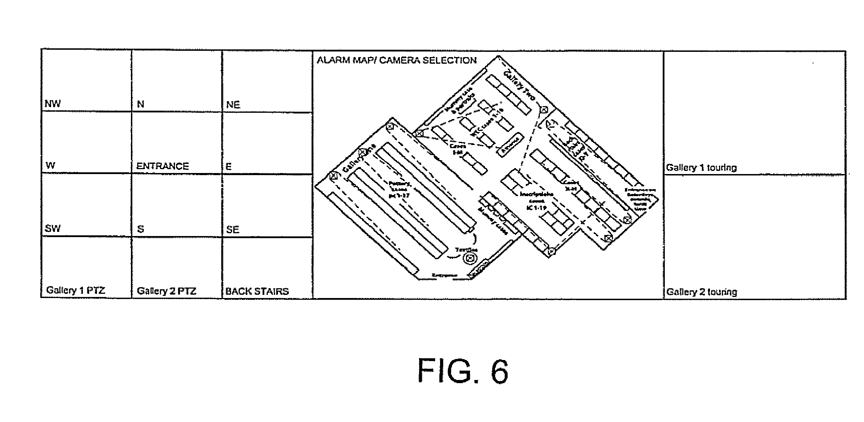

Typical use cases for the described invention are monitoring solutions for the broadcast and security markets. Figs. 5 and 6 illustrate typical views on a broadcast multiviewer display and security multiviewer display, respectively. The decoded information does not overlap most of the time, which means that merging artifacts are minimized and therefore merging the information from all source streams into a single stream is not a problem. It should be noted that the herein-described technique can be used for all kinds of monitoring and visualization solutions where multiple sources of information have to be combined for visualization on one or more displays.

Although the invention has been shown and described with respect to a certain preferred embodiment or embodiments, it is obvious that equivalent alterations and modifications will occur to others skilled in the art upon the reading and understanding of this specification and the drawings. In particular, in regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent). In addition, while a particular feature of the invention may have been described above with respect to only one or more of several illustrated embodiments, such feature may be combined with one or more other features of the other embodiments, as may be desired and advantageous for any given or particular application.

## Claims

1. A multi-image viewer system comprising an encoder having inputs for receiving images from one or more sources and one or more processors for encoding the multiple images; a decoder defining with the encoder a compressed domain therebetween, and a combiner within the compressed domain operative to merge structural elements of the multiple images into an encoded multi-view image data stream for delivery to the decoder.

2. A viewer system according to claim 1, comprising a storage device for storing the encoded multi-view image data stream.

3. A viewer system according to claim 1 or 2, comprising at least one monitor for displaying the multi-view image after decoding by the decoder.

4. A viewer system according to any preceding claim, comprising a scaler including one or more processors operative to scale one or more parts of the multi-view image prior to display on a monitor.

5. A viewer system according to any preceding claim, wherein the encoder is configured to use structural elements of one or more of the encoded source streams for merging the encoded multi-view image stream.

6. A viewer system according to any preceding claim, wherein the data streams are merged by the combiner.

7. A viewer system according to any preceding claim, wherein a JPEG2000 codec is used for encoding.

8. A viewer system according to any preceding claim, wherein code blocks are used as structural elements on which to base the merging of source streams.

9. A viewer system according to any preceding claim, wherein precincts are used as the structural elements on which to base the merging of source streams.

10. A viewer system according to any preceding claim, wherein tiles are used as the structural elements on which to base the merging of source streams.

11. A system for producing a merged data stream comprising an encoder having inputs for receiving images from one or more sources and one or more processors for encoding the multiple images; and a combiner operative to merge structural elements of the multiple images into an encoded multi-view image data stream for delivery to a decoder that defines with the encoder a compressed domain therebetween.

12. A system according to claim 11, wherein the encoder is configured to use structural elements of one or more of the encoded source streams for merging the encoded multi-view image stream.

13. A system according to claim 11 or 12, wherein the data streams are merged by the combiner.

14. A viewer system according to any one of claims 11 to 13, wherein a JPEG2000 codec is used for encoding.

15. A system comprising a decoder for decoding an encoded multi-view image data stream that includes merged structural elements of multiple encoded images.

16. A system according to claim 15, comprising at least one monitor for displaying the multi-view image after decoding by the decoder.

17. A system according to claim 15 or 16, comprising a scaler including one or more processors operative to scale one or more parts of the multi-view image prior to display on a monitor.

18. An image processing method for processing multiple images for subsequent display, comprising encoding the source images received in the encoder, compressing the encoded source images in the compressed domain, merging the encoded source images into a data stream, and decoding the merged data stream.

19. An image processing method according to claim 18, comprising displaying the merged image.
